# EUROPEAN PATENT APPLICATION

(11) **EP 1 641 225 A1**
(43) Date of publication of application: **29.03.2006**
(21) Application number: 05020799.2
(22) Date of filing: 23.09.2005
(51) Int. Cl.: H04M 1/2745, H04M 1/57, H04M 1/725

(54) **Apparatus and method for updating registered images in a phonebook of a portable wireless terminal**

(30) Priority: 23.09.2004 KR 2004076231
(71) Applicant: Samsung Electronics Co., Ltd., Suwon-si, Gyeonggi-Do (KR)
(72) Inventor: Choi, Seong-Hoon, Songpa-gu, Seoul (KR); Jin, Jeong-Gyu 250-802, Ssangyong APT, Yeotong-gu, Suwon-si, Gyeonggi-do (KR)
(74) Representative: Grünecker, Kinkeldey, Stockmair & Schwanhäusser Anwaltssozietät

(57) **Abstract**

An apparatus and method for automatically updating a registered image in a phonebook of a portable wireless terminal. In the method, if a sender's image is registered in phonebook entries when a multimedia message is received, the registered image is displayed and a pop-up message is shown to ask for updating the registered image, and if the updating of the registered image is accepted, an image is extracted from the received multimedia message and the registered image is updated with the extracted image. Therefore, the inconvenience of the manual image registration in the phonebook can be eliminated, and the registered image in phonebook entries is also updated consistently with the latest image, such that the user can save the latest image of the message sender.

## Description

The present invention relates generally to an apparatus and method for updating a registered image in a phonebook of a portable wireless terminal, and more particularly, to an apparatus and method for automatically registering an image extracted from a received multimedia message in a phonebook of a portable wireless terminal.

As a variety of electronic and communication industries advance, portable wireless terminals have become more widely available, functions of wireless terminals have become more diversified to meet growing user demands. Additionally, wireless terminals tend to be small and lightweight. For example, with the introduction of portable wireless terminals having a built-in digital cameras, desired objects can be easily captured and stored. Also, the captured images can be uploaded on a wireless Internet server and transmitted to other terminals.

In portable wireless terminals, Short Message Service (SMS) and phonebook functions are commonly used functions. Further, the SMS is evolving into a Multimedia Messaging Service (MMS) that can transmit messages having an images attached thereto. Therefore, a phonebook in which images (e.g., pictures, emoticons, etc) can be registered has been introduced. This is commonly referred to as a "photo phonebook". That is, the phonebook has evolved from the simple phone number storing feature to the image storing feature.

When wireless terminal users take pictures or receive multimedia messages having images, the users must manually register the images one by one in the phonebook of the wireless terminal. This manual registration can be a tedious and troublesome task to the users, thereby inconveniencing the user.

One function of the photo phonebook is to enable a sender image (or a caller image) to be displayed on a recipient terminal when a call is received, in order to allow the recipient to identify the sender. However, the conventional photo phonebook is constructed to store only one image in each phonebook entry, i.e., a previously saved image must be deleted to save a new image. This may cause the user to hesitate to save a new image and therefore an old image instead of a recent image may be displayed when a call is received, such that the image display function for notifying the recipient of the sender cannot be carried out effectively.

It is the object of the present invention to provide an apparatus and method for automatically updating a registered image in a phonebook of a portable wireless terminal.

This object is solved by the subject matter of the independent claims.

Preferred embodiments are defined in the dependent claims.

Also, according to one aspect, the present invention provides an apparatus and method for automatically registering an image extracted from a received multimedia message in a phonebook of a portable wireless terminal.

Further, according to another aspect, the present invention provides an apparatus and method for automatically updating a registered image in a phonebook of a portable wireless terminal with an image extracted from a received multimedia message.

Further, according to a further aspect, the present invention provides an apparatus and method for automatically updating a registered image in a phonebook of a portable wireless terminal with an image extracted from a received multimedia message according to a user's desire.

According to yet another aspect of the present invention, a method for automatically updating a registered image in a phonebook of a portable wireless terminal, includes the steps of extracting an image from the received multimedia message, when a multimedia message is received, and updating a registered image in a multimedia message sender's phonebook entry with the extracted image.

According to still another aspect of the present invention, a method for automatically updating a registered image in a phonebook of a portable wireless terminal, includes the steps of determining if a sender's image exists in a phonebook entry, when a multimedia message is received, displaying the registered image and displaying a pop-up message requesting updating of the registered image, if the image is registered, and extracting an image from the received multimedia message and updating the registered image with the extracted image, if the updating of the registered image is selected,.

According to a further another aspect of the present invention, a method for automatically updating a registered image in a phonebook of a portable wireless terminal, includes the steps of displaying a received multimedia message and extracting an image from the received multimedia message when a Phonebook save key is pressed; and updating a registered image in a multimedia message sender's phonebook entry with the extracted image.

According to a further aspect of the present invention, an apparatus for automatically updating a registered image in a phonebook of a portable wireless terminal, includes a phonebook for registering an image; a display for displaying a received multimedia message; and a microprocessor unit extracting an image from the received multimedia message and accessing the phonebook to update a registered image in a message sender's phonebook entry with the extracted image.

The accompanying drawings, which are included to provide a further understanding of the present invention and are incorporated in and constitute a part of this application, illustrate embodiment(s) of the invention and together with the description serve to explain the principle of the invention. In the drawings:

Fig. 1 is a block diagram of a portable wireless terminal according to an embodiment of the present invention;

Fig. 2 is a flowchart illustrating a method for automatically updating an registered image in a phonebook of a portable wireless terminal according to an embodiment of the present invention;

Fig. 3 is a flowchart illustrating a method for automatically updating an registered image in a phonebook of a portable wireless terminal according to another embodiment of the present invention; and

Fig. 4 illustrates exemplary screens to be sequentially displayed on a display when a phonebook image updating is performed according to the present invention.

Reference will now be made in detail to preferred embodiments of the present invention, examples of which are illustrated in the accompanying drawings. Also, when it is determined that the subject of the invention may be ambiguous by a detailed description thereof, the detailed description will be omitted.

Hereinafter, an apparatus and method for automatically updating a registered image in a phonebook of a portable wireless terminal with an image extracted from a received multimedia message will be described. The term "multimedia message" is used to denote any kind of message having any kind of image, for example, a Multimedia Messaging Service (MMS) message, an e-mail message, an Enhanced Messaging Service (EMS) message, etc. Also, the multimedia message can include a message serviced in a manner such that Internet link information is transmitted to a recipient and the recipient uses that information to download a corresponding image from a WEB server.

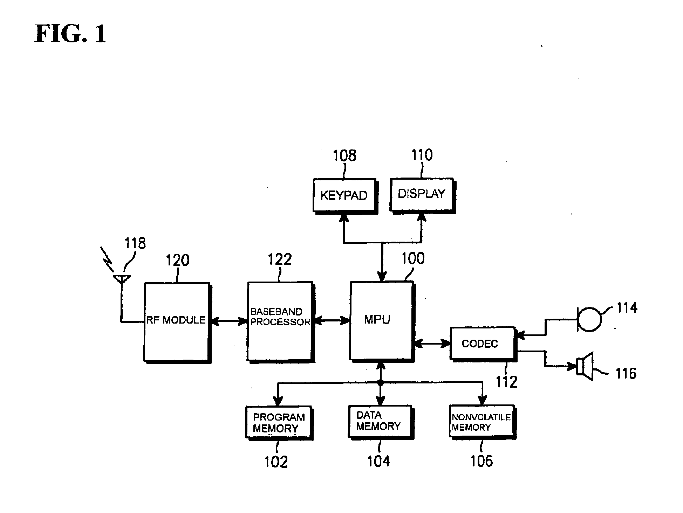

Fig. 1 is a block diagram of a portable wireless terminal according to an embodiment of the present invention. Portable wireless terminals include cellular phones, Personal Communication System (PCS) terminals, Personal Data Assistants (PDAs), International Mobile Communication-2000 (IMT-2000) terminals, 4G (OFDM: Orthogonal Frequency Division Multiplexing) terminals, and other mobile terminals. Accordingly, the following description will be made to illustrate a general structure of portable wireless terminals.

Referring to Fig. 1, a MicroProcessor Unit (MPU) 100 controls an overall operation of the terminal. For example, the MPU 100 processes and controls voice communication and data communication. In addition to the typical functions, the MPU 100 controls the process of automatically updating a registered image in a phonebook entry with an image extracted from a received multimedia message. The typical process and control operations of the MPU 100 are well known in the art and are described here in sufficient detail to aid understanding the present invention.

A memory includes a program memory 102, a data memory 104 and a nonvolatile memory 106. The program memory 102 stores a program for controlling an overall operation of the terminal. A flash memory may be used as the program memory 102. The data memory 104 temporarily stores data that is created during the operation of the terminal. A Random Access Memory (RAM) (not shown) may be used as the data memory 104. The nonvolatile memory 106 stores system parameters and other data (e.g., phone numbers, SMS message data, image data, and other data as required). An electrically erasable and programmable read only memory (EEPROM) can be used as the nonvolatile memory 106. Photo phonebook data may be stored in the data memory 104 and/or nonvolatile memory 106.

A keypad 108 includes common Numeric keys of digits 0-9 and a plurality of Function keys, such as a Menu key, a Cancel (Delete) key, a Confirmation key, a Talk key, an End key, an internet connection key and Navigation keys (▲/▼/◄/►). Pressing the keypad 108 creates a corresponding key input data, which is transmitted to the MPU 100. A display 110 displays status information (or indicator) of the terminal, numerals and characters, moving pictures and still pictures, etc. A color liquid crystal display (LCD) may be used as the display 110.

A coder-decoder (CODEC) 112 connected to the MPU 100, a speaker 116 connected to the CODEC 112, and a microphone 114 connected to the CODEC 112 comprise an audio input/output block that is used for a voice communication. The MPU 100 produces pulse code modulated (PCM) data and the CODEC 112 converts the PCM data into analog audio signals. The analog audio signals are output through the speaker 116. Also, the CODEC 112 converts audio signals received through the microphone 114 into PCM data and provides the PCM data to the MPU 100.

A Radio Frequency (RF) module 120 decreases the frequency of an RF signal received through an antenna 118 and provides the RF signal to a baseband processor 122. The RF module 120 increases the frequency of a baseband signal provided from the baseband processor 122 and transmits the baseband signal via the antenna 118. The baseband processor 122 processes the baseband signals that are transmitted/received between the RF module 120 and the MPU 100. For example, during data transmission, the baseband processor 122 performs channel coding and spreading on the transmission data. During data reception, the baseband processor 122 performs despreading and channel decoding on the reception data.

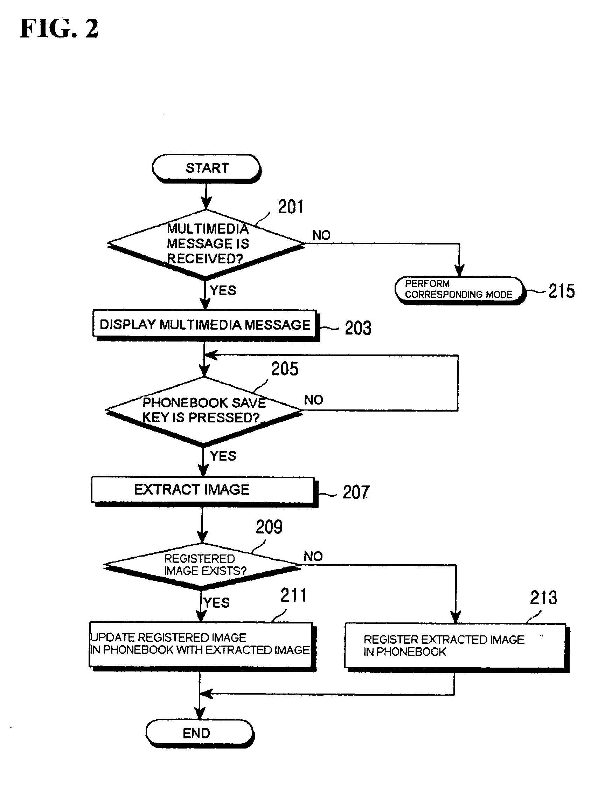

Fig. 2 is a flowchart illustrating a method for automatically updating an registered image in a phonebook of a portable wireless terminal according to an embodiment of the present invention;

In step 201, the MPU 100 determines if a multimedia message is received. If a message is not received, the MPU 100 proceeds to step 215 to enter a corresponding mode (e.g., a hold mode or any other desired mode). If the multimedia message is received, the MPU 100 proceeds to step 203 and searches a message sender's name from phonebook entries using the sender's phone number, and displays the received multimedia message and the sender's name in a window.

The multimedia message, as described above, may be a SMS message having Internet link information to enable a recipient to download an image uploaded on a web server by a sender. If an SMS message having internet link information is received, the MPU proceeds to step 203 where it first downloads the image from the web and performs searching and displaying as described above.

In step 205, the MPU 100 determines if a Phonebook save key is pressed and if such a key is pressed, proceeds to step 207 to extract an image from the received multimedia message and proceeds to step 209.

In step 209, the MPU 100 searches phonebook entries to find sender's entry and check whether a previously registered image exists. If a previously registered image exists, the MPU 100 proceeds to step 211 to update the registered image with the extracted image and then terminates the processing. If not, the MPU proceeds to step 213 to register the extracted image in the phonebook and then terminates the processing.

In the embodiment described above, even though the image registration in the phonebook is performed upon the user's keystroke, the image registration may be also performed automatically without the user's keystroke when the multimedia message is received. Also, in case the sender's entry is not registered in the phonebook when the recipient pressed the Phonebook save key, the image and sender's phone number obtained from the received multimedia message can be displayed on the display 110 so that the user can to register the sender in the phonebook.

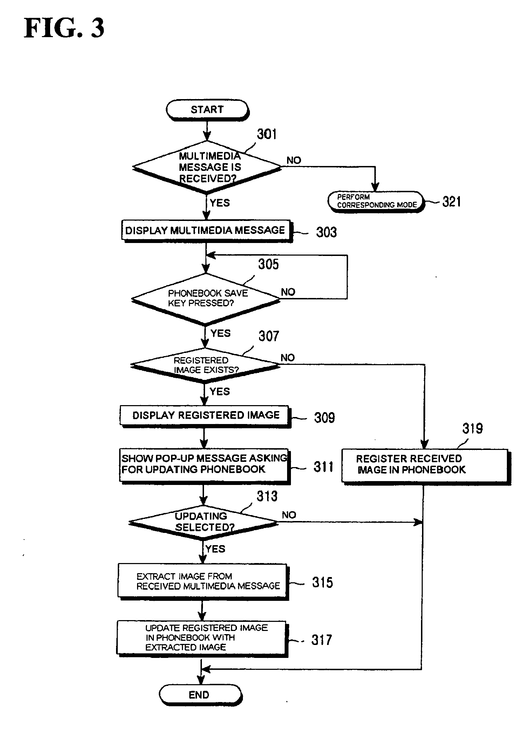

Fig. 3 is a flowchart illustrating a method for automatically updating a registered image in a phonebook of a. portable wireless terminal according to another embodiment of the present invention.

Referring to Fig. 3, in step 301, the MPU 100 determines whether a multimedia message is received. If a multi-media message is not received, the MPU 100 proceeds to step 321 to perform a corresponding mode or other desired mode (e.g., a hold mode). Alternatively, if the multimedia message is received, in step 303, the MPU 100 displays the received multimedia message on a screen. Herein, the multimedia message, as described above, includes a message with an image and a SMS message having Internet link information to allow recipient to download an image uploaded on a web server by a sender.

In step 305, the MPU 100 determines whether the recipient a Phonebook save key and if selected , proceeds to step 307 to search sender's phonebook entry and check whether a the sender's registered image exists. If the sender's registered image does not exist, the MPU 100 proceeds to step 319 to register an image extracted from the received multimedia message in the sender's phonebook entry and then terminates the processing. Alternatively, in step 307 if the sender's registered image exists, the MPU 100 proceeds to step 309.

In step 309, the MPU 100 displays the registered image in the phonebook on a whole screen or partial screen. In step 311, a pop-up menu appears on the screen to ask whether the user wants to update the registered image and then proceeds to step 313. In step 313 the MPU 100 determines whether the recipient selected to update the registered image. If the recipient did not select to update the registered image , the MPU 100 terminates the processing.

Alternatively, if the recipient selected to update the registered image, the MPU 100 proceeds to step 315 where an image is extracted from the received multimedia message and then proceeds to step 317. In step 317, the MPU 100 updates the registered image in the phonebook with the extracted image and then terminates the processing.

In the embodiment above described, even though the image registration in the phonebook is performed upon the user's keystroke, the image registration may also be performed automatically without the user's keystroke when the multimedia message is received. Also, in case the sender's entry is not registered in the phonebook when the recipient selects the Phonebook save key, the image and sender's phone number obtained from the received multimedia message can be displayed so that the recipient can register the sender in the phonebook if so desired.

In case of a terminal with a photo phonebook function, when a multimedia message or call is received, a sender's image registered in the photo phonebook is displayed on the screen. According to the present invention, the image registered in the photo phonebook can be consistently updated and thereby the latest image of the sender can be displayed on the screen when a multimedia message or a call is received.

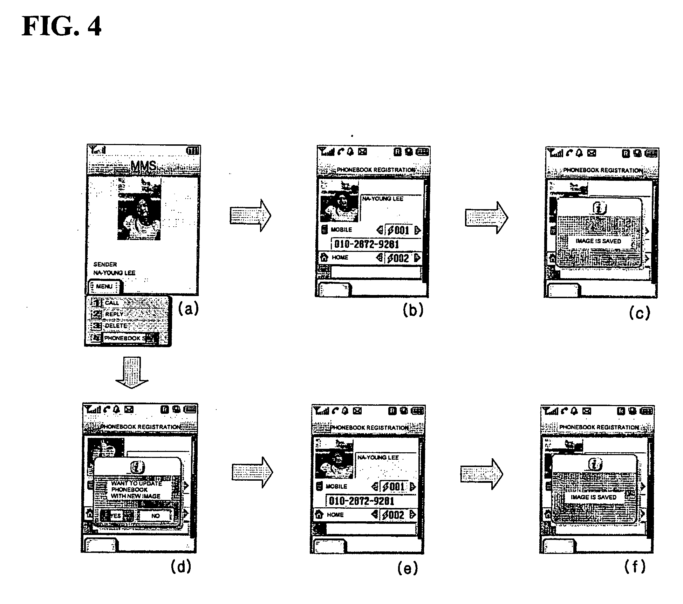

For a further understanding of the present invention, a case example will be described with reference to Fig. 4. wherein exemplary screenshots which can be sequentially displayed on a display when a phonebook image updating is carried out are shown.

Referring to Fig. 4, a received multimedia message is displayed on screen (a) and if a user selects a Phonebook save menu, a registered image in a corresponding phonebook entry is updated with an image extracted from the received multimedia message. Then updated phonebook entry is displayed on screen (b) of Fig. 4 and finally saved when the user press a Confirmation key. After that, a pop-up message is shown in screen (c) of Fig. 4 to notify the user that the updated phonebook is completely saved.

Meanwhile, screens (d) through (f) of Fig. 4 are illustrated according to another embodiment of the present invention. When the user selects the Phonebook save menu on the screen (a) of Fig 4, a corresponding phonebook entry having a pre-registered image is displayed on screen (d) of Fig. 4 and a pop-up message is overlapped thereon to ask whether the user wants to update the phonebook entry. If the user selects "Yes" to update the phonebook entry, the pre-registered image in the phonebook entry is updated with the image extracted from the received multimedia message and updated phonebook entry is displayed on screen (e) of Fig. 4. The updated phonebook entry is finally saved when the user presses the Confirmation key and then a pop-up message is shown in screen (f) of Fig. 4 to notify the user that the updated phonebook is completely saved.

As described above, in the present invention the multimedia message reception and the phonebook registration are associated, such that a user of the terminal can automatically update an image in the phonebook and the inconvenience of having to manually update an image in a phonebook can be eliminated. Additionally, the registered image in the phonebook entry can be updated consistently with the latest image, such that the user can see the latest image of the sender when receiving a call or a message.

The forgoing embodiments are merely exemplary and are not to be construed as limiting the present invention. The present teachings can be readily applied to other types of apparatuses. The description of the present invention is intended to be illustrative, and not to limit the scope of the claims, i.e., many alternatives, modifications, and variations will be apparent to those skilled in the art.

## Claims

1. A method of automatically updating a registered image in a phonebook of a portable wireless terminal, comprising the steps of:
extracting an image from a received multimedia message, when the multimedia message is received; and
updating a registered image in a multimedia message sender's phonebook entry with the extracted image.

2. The method of claim 1, wherein the multimedia message is selected from a group including an MMS, Multimedia Message Service, message, an E-mail message, and an EMS, Enhanced Messaging Service, message.

3. A method of automatically updating a registered image in a phonebook of a portable wireless terminal, comprising the steps of:
determining whether a registered image exists in a phonebook entry, when a multimedia message is received;
displaying the registered image and showing a pop-up message requesting updating of the registered image, if the registered image exists; and
extracting an image from the received multimedia message and updating the registered image with the extracted image, if the updating of the registered image is selected.

4. The method of claim 3, further comprising the step of extracting an image from the received multimedia message and automatically saving the extracted image in a phonebook entry, if the registered image does not exist.

5. The method of claim 3 or 4, wherein the multimedia message is a message selected from the group including an MMS message, an e-mail message, and an EMS message.

6. The method of claim 4, wherein the image is the sender's image.

7. A method of automatically updating a registered image in a phonebook of a portable wireless terminal, comprising the steps of:
displaying a received multimedia message and extracting an image from the received multimedia message when a Phonebook save key is pressed; and
updating a registered image with the image in a multimedia message phonebook entry corresponding to the sender of the multimedia message.

8. An apparatus for automatically updating a registered image in a phonebook of a portable wireless terminal, comprising:
a phonebook for registering an image;
a display for displaying a received multimedia message; and
an MPU, MicroProcessor Unit, for extracting an image from the received multimedia message and accessing the phonebook to update a registered image in a message sender's phonebook entry with the extracted image.

9. The apparatus of claim 8, wherein the multimedia message is selected from a group including an MMS message, an e-mail message, and an EMS message.
